# EUROPÄISCHE PATENTSCHRIFT

(11) **EP 2 630 381 B1**
(45) Veröffentlichungstag und Bekanntmachung des Hinweises auf die Patenterteilung: **05.08.2020**
(21) Anmeldenummer: 11770815.6
(22) Anmeldetag: 20.10.2011
(51) Int. Cl.: F16C 33/58, F16C 37/00

(54) **ANORDNUNG MIT VORRICHTUNGEN ZU INTEGRIERTER KÜHLUNG UND/ODER HEIZUNG SOWIE EIN VERFAHREN ZUR INTEGRIERTEN BEHEIZUNG ODER KÜHLUNG**
ARRANGEMENT WITH DEVICES FOR INTEGRATED COOLING AND/OR HEATING AND A METHOD FOR THE INTEGRATED HEATING OR COOLING
AGENCEMENT PRÉSENTANT DES DISPOSITIFS À REFROIDISSEMENT ET/OU CHAUFFAGE INTÉGRÉ, ET PROCÉDÉ POUR LE CHAUFFAGE OU LE REFROIDISSEMENT INTÉGRÉ

(30) Priorität: 21.10.2010 DE 102010049953
(43) Veröffentlichungstag der Anmeldung: 28.08.2013
(73) Patentinhaber: IMO Holding GmbH, 91350 Gremsdorf (DE)
(72) Erfinder: FRANK, Hubertus, 91315 Höchstadt (DE)
(74) Vertreter: Schmidt, Steffen J.
(86) Internationale Anmeldenummer: PCT/EP2011/068368
(87) Internationale Veröffentlichungsnummer: WO 2012/052521

(56) Entgegenhaltungen:
- WO-A1-2004/104434
- DE-A1-102007 029 571
- US-A- 4 948 269

## Beschreibung

Die Erfindung betrifft eine Lageranordnung sowie eine Anordnung als Lager, Großwälzlager, Schwenktrieb oder Drehverbindung mit Vorrichtungen zu integrierter Kühlung und/ oder Heizung sowie ein Verfahren zur integrierten Beheizung oder Kühlung eines Lagers, Großwälzlagers, Schwenktriebs oder einer Drehverbindung.

Aktuell handelsübliche und im Einsatz befindliche Großwälzlager, Lager und allgemeine Drehverbindungen des Maschinen- und Anlagenbaus, die auch in Schwenktrieben eingesetzt werden können, um eine Unterkühlung der Lagerkomponenten - insbesondere der beanspruchten Komponenten in und um die Laufbahnen der Drehverbindung(en) - zu vermeiden, werden mittels einer Flüssigkeit oder mittels eines Öls gekühlt. Es existieren auch technische Lösungen, nach dem die Lagerkomponenten, insbesondere die beanspruchten Komponenten, mittels einer Flüssigkeit oder mittels eines Öls, oder sogar mittels elektrischer Heizung, beheizt werden.

Derartige Großwälzlager, Lager und allgemeine Drehverbindungen des Maschinen- und Anlagenbaus, werden häufig auch in solchen Anwendungsfällen eingesetzt, die von starken Temperaturschwankungen und/oder extremen Einsatzgebieten betroffen sind. Insbesondere werden solche Teile häufig in Windkraftanlagen, Kränen, Schiffskränen, im Tunnelbau, oder auf allen erdenklichen anderen Einsatzfeldern benutzt. Es ist in jedem Falle festzustellen, dass Großwälzlager, Lager und allgemeine Drehverbindungen des Maschinen- und Anlagenbaus teilweise extremen Temperatur- und Umweltbedingungen ausgesetzt sind, somit auch extremer Hitze oder extremer Kälte.

In der DE 102005058141 A1 und der zugehörigen WO 2007/065412 A1 geht es um ein Wälzlager mit mindestens einem beheizten Wälzlagerring so, dass ein elektrisches Heizelement in gut wärmeleitendem Kontakt auf einem Oberflächenabschnitt des beheizten Wälzlagerringes aufgebracht ist wobei die vom Heizelement generierbare Wärmemenge so bemessen sei, dass der beheizte Wälzlagerring beim Aufheizen eine thermische Ausdehnung erfährt. Diese Ausdehnung ermöglicht die Montage des Wälzlagers an einem Gestellelement unter Ausbildung einer Schrumpfpassung bei nachfolgender Abkühlung.

In der DE 102008052287 A1 geht es um eine Lageranordnung, umfassend ein Lager, das von einem Medium (insbesondere Wasser) durchströmt sei und eine Filtereinrichtung, die dem Lager einströmseitig vorgeschaltet sei um die Partikel aus dem Medium zu entfernen, und eine Welle, die in dem Lager aufgenommen ist, so, dass eine Fördereinrichtung für das Medium dem Lager ausströmseitig nachgeschaltet sei und die den Fluss des Mediums durch das Lager steuere.

Beispielhaft seien als Stand der Technik auch noch die Schriften DE 2021156 B2, WO 99/35414, DE 4234303 A1 und DE 102004015176 A1 genannt, die ebenfalls Kühlvorrichtungen für Lager beschreiben.

Aus der WO 2004/104434 A1 ist eine Anordnung bekannt, bei der zwecks Trennung von Schmierung und Kühlung der Lageraußenring eines Wälzlagers auf der den Wälzkörpern abgewandten Seite Kanäle aufweist, durch die am Außenumfang des Wälzlagers ein der Kühlung dienendes Medium geführt ist. Die Kanäle des Lageraußenringes sind als spiralförmige oder labyrinthartige oder schlangenartige Nuten ausgebildet und von einer mit der Geometrie des Lageraußenringes korrespondierenden Kappe öldicht abgedeckt. Als Kühlmedium ist ein im Zwangsdurchlauf geführtes Öl verwendet.

Von einer passiven oder indirekten Kühlung kann allgemein gesprochen werden, wenn eine indirekte Kühlung vorliegt, wie beispielsweise beim Prinzip des Wärmerohres (engl. Heat-Pipe), oder aber beim Prinzip der Wärmekonvektion. Ein Wärmerohr funktioniert allgemein als ein Wärmeüberträger, der unter Nutzung von Verdampfungswärme eines Stoffes eine hohe Wärmestromdichte erlaubt, d.h. auf kleiner Querschnittsfläche können große Mengen Wärme transportiert werden. Beim Prinzip der Wärmekonvektion beispielsweise über Kühlrippen, Radiatoren, et cetera, die in einem Teil vorhandene Abwärme an die umgebende Luft abgegeben.

Gesamthaft ist hier zusammenzufassen, dass die technischen Lösungen des aktuellen Technikstandes gemäß oben genannten Dokumenten oft den großen Nachteil haben, dass sie entweder im Rahmen einer Beheizung, oder aber im Rahmen einer Kühlung von Teilen der Lageranordnung gefunden wurden.

Insbesondere fettgeschmierte Drehverbindungen lassen sich bis heute schlecht direkt und aktiv kühlen oder auch schlecht direkt und aktiv beheizen. Hier bleibt dem Fachmann zumeist nur die (unzureichende) indirekte Kühlung als Lösung übrig. Bei sehr tiefen Temperaturen (etwa -40°C und kälter) ist das Fett im Lager steif und behindert den Lauf des Lagers beziehungsweise den Anlauf der Anlage. Bei sehr hohen Temperaturen hingegen wird das Öl im Fett niedrigviskos, und das Schmierfett wird dadurch negativ beeinflusst. Sowohl zu niedrige, als auch zu hohe Temperaturen mindern die Qualität des Schmierfettes vorzeitig, sodass das Schmierfett vorzeitig ausgetauscht werden muss.

Alle oben genannten Ausführungen betrachtend gilt es ein erfindungsgemäßes System zu schaffen, bei dem die Wärme auch bei Fettschmierung direkt, schnell und effizient, aus dem Lager vorzugsweise mittels aktiver Kühlung abtransportiert wird. Selbiges System soll zugleich auch dafür geschaffen sein, dass das Lager bzw. Großwälzlager bzw. Drehverbindung oder Schwenktrieb, schnell und effizient im Sinne einer aktiven Beheizung beheizt werden kann. Die Lösung ergibt sich durch die vorliegende Erfindung, beschrieben durch die in den Patentansprüchen aufgeführten Merkmale.

Die gemäß der Erfindung gestaltete Lageranordnung umfasst:
- wenigstens zwei ringförmige Komponenten, die relativ zueinander um eine Drehachse rotierbar sind;
- eine Mehrzahl an Wälzkörpern, die zwischen den ringförmigen Komponenten angeordnet sind, die diese bei einer Rotation relativ zueinander diese gegeneinander abstützt.
   Diese erfindungsgemäße Lageranordnung zeichnet sich dadurch aus, dass
- zur Beheizung und/oder Kühlung wenigstens einer der ringförmigen Komponenten eine Mehrzahl von Materialaussparungen in axialer Richtung an wenigstens einer ringförmigen Komponente vorgesehen ist, welche zumindest einen Abschnitt eines Strömungskanals ausbildet,
   wobei
- an der wenigstens einen ringförmigen Komponente
   (i) wenigstens ein mantelförmiges Teil und
   (ii) wenigstens eine obere Abschlussplatte und/oder wenigstens eine untere Abschlussplatte festgelegt ist, welche eine strömungstechnische Begrenzung des Strömungskanals gegenüber der Umgebung bilden,
   und wobei
- jeweils zwischen der ringförmigen Komponente und der jeweiligen Abschlussplatte Lochscheiben vorgesehen sind, die Strömungskammern ausbilden, die die Materialaussparungen in Umfangsrichtung miteinander strömungstechnisch verbinden.

Die Erfindung betrifft weiterhin ein Verfahren gemäß Anspruch 8. Weitere vorteilhafte Ausgestaltungen sind in den abhängigen Ansprüchen angegeben.

Eine derart gestaltete Lageranordnung erlaubt die Einstellung einer Betriebstemperatur zumindest der für die Bewegung relevanten Teile der Lageranordnung unabhängig von der Umgebungstemperatur. Die Eigenschaften der Lageranordnung hinsichtlich Verschleiß und Zuverlässigkeit sind verbessert, ebenso wie die Anlaufeigenschaften der Lageranordnung, beispielsweise aus dem Stillstand bei tiefen oder hohen Temperaturen.

Durch die Ausbildung einer Materialaussparung an einer oder mehreren der ringförmigen Komponenten entsteht ein Strömungskanal durch den Wärmeaustauschmedium fließen kann. Dadurch ist es möglich das Wärmeaustauschmedium sehr nahe an den Wälzlagerbahnen anzuordnen, das heißt in unmittelbarer Nachbarschaft des Ortes der Wärmeentstehung.

Die Heiz- bzw. Kühlleistung ist bei einer höheren Anzahl an Materialaussparungen durch die Wärmeaustauschmedium geleitet werden kann, höher. Selbstverständlich ist denkbar, dass diese Materialaussparungen spiralförmig um die Drehachse umlaufen, so dass sich ein langer Strömungskanal ergibt, dessen Länge größer ist als der Umfang des Außenradius der Lageranordnung, insbesondere ein Vielfaches des Außenradius der Lageranordnung beträgt.

Erfindungsgemäß ist eine Mehrzahl von Materialaussparungen in axialer Richtung an wenigstens einer ringförmigen Komponente vorgesehen, welche zumindest einen Abschnitt eines Strömungskanals ausbildet, insbesondere so dass die Materialaussparungen in axialer Richtung mit wenigstens einer Materialaussparung in Umfangsrichtung in strömungstechnischer Verbindung stehen.

Durch eine derartige Gestaltung der Lageranordnung können die notwendigen Materialaussparungen bei der Herstellung der Einzelteile eingearbeitet werden, so dass beim Zusammenbau der Einzelteile der Strömungskanal mit sämtlichen notwendigen strömungstechnischen Verbindungen gebildet wird.

Gemäß der Erfindung ist an der wenigstens einen ringförmigen Komponente eine obere Lochscheibe und/oder eine untere Lochscheibe festgelegt, die obere Strömungskammern und/oder untere Strömungskammern ausbilden, so, dass die oberen Strömungskammern und/oder unteren Strömungskammern eine Mehrzahl von in axialer Richtung angeordneten Materialaussparungen in Umfangsrichtung miteinander strömungstechnisch verbinden, vorzugsweise so, dass ein mäanderförmiger oder serpentinenförmiger Strömungskanal geformt ist.

Die Gestaltung der oder des Strömungskanals in mäandernder oder serpentinenartiger Form erlaubt die Führung des Wärmeaustauschmediums entlang einer möglichst großen Fläche der ringförmigen Komponente. Die Heiz-, bzw. Kühlwirkung des Wärmeaustauschmediums kann so gesteigert werden.

Erfindungsgemäß beinhaltet die Lageranordnung wenigstens eine obere Abschlussplatte, und/oder wenigstens eine untere Abschlussplatte, die an der wenigstens einen ringförmigen Komponente festgelegt ist/sind. Erfindungsgemäß ist ferner ein mantelförmiges Teil an der wenigstens einen ringförmigen Komponente festgelegt, wobei obere Abschlussplatte und/oder untere Abschlussplatte und mantelförmiges Teil eine strömungstechnische Begrenzung des Strömungskanals gegenüber der Umgebung, vorzugsweise mittels Dichtelementen, bilden, insbesondere so, dass obere Abschlussplatte und/oder untere Abschlussplatte und/oder mantelförmiges Teil wenigstens eine Befüllvorrichtung, vorzugsweise wenigstens eine Befüllbohrung aufweisen, über welche Wärmeaustauschmedium dem Strömungskanal zugeführt und von diesem abgeführt werden kann.

Die Verwendung von Abschlussplatten erlaubt eine strömungsdichte Abschottung des Strömungskanals gegenüber der Umgebung. Insbesondere wichtig ist das Vorsehen einer Befüllvorrichtung, die hierdurch ebenfalls gut dichtend ausgebildet sein und eine sichere Befüllung erlaubt.

Auch können Vorrichtungen zur Beheizung und/oder Kühlung Elemente zur Beheizung und/oder Kühlung umfassen, insbesondere Heizdrähte, elektrothermische Wandler und/oder Peltierelemente, wobei die genannten Element an Wandungen der axialen und/oder in Umfangsrichtung angeordneten Materialaussparungen angeordnet sein können und/oder an oder benachbart zur Wälzkörperlaufbahn angeordnet sein können.

Heizdrähte, elektrothermische Wandler und Peltierelemente sind sehr gut regelbar und steuerbar, so dass eine gewünschte Temperatur sehr genau eingestellt werden kann.

Zudem kann es ermöglicht sein, dass die Steuerungs- und/oder Regelungseinrichtung die Temperatur wenigstens einer ringförmigen Komponente in Abhängigkeit von der Umgebungstemperatur auf eine gewünschte Betriebstemperatur einstellt, vorzugsweise auf eine Betriebstemperatur, die an eine vorbestimmte günstige Temperatur eines eingesetzten Schmiermittels angepasst ist.

Besonders günstig für den Betrieb der Lageranordnung ist es, wenn zu Beginn und während des Betriebes die Temperatur der Lageranordnung und des Schmiermittels so eingestellt sind, dass die Schmierwirkung des Schmiermittels optimal ausgenutzt wird.

In einer weiteren Ausbildung der Lageranordnung kann das Wärmeaustauschmedium in einer Vorzugs-Strömungsrichtung den Strömungskanal geleitet werden, wobei die Steuerungs- und/oder Regelungseinrichtung die Vorzugs-Strömungseinrichtung ändern kann.

Durch die Umkehr der Vorzugs-Strömungsrichtung kann die Temperatur besonders homogen über den gesamten Umfang der ringförmigen Komponente eingestellt werden.

Zusammenfassend soll während des Betriebes die Anordnung (Lager bzw. Großwälzlager bzw. Drehverbindung bzw. Schwenktrieb) davor geschützt sein, zu hohe oder zu tiefe Temperaturen zu erfahren. Insbesondere wird durch das erfindungsgemäße System und dessen sinnvolle Beschaltung gewährleistet, dass auch beim Anfahren der Anlage keine zu hohen oder zu tiefen Temperaturen herrschen. Die aktive Beheizung/ Kühlung kann dabei unterstützt werden durch indirekt (passiv) kühlende oder heizende Maßnahmen, Vorrichtungen und Funktionen. Um die oben allesamt genannten Nachteile zu verringern bietet sich insbesondere die vorliegende Erfindung an.

Die wesentlichen Elemente zur Kühlung/ Heizung sind dabei in der Anordnung, beispielsweise der Drehverbindungen und/oder dem Schwenktrieb, integriert. Es kann sich auch um Möglichkeiten der der aktiven Medienbeheizung bzw. Medienkühlung handeln, wobei die Durchströmung des Lagers mit dem Wärmeaustauschmedium optimaler gestaltet ist, beispielsweise durch verbesserte Durchströmungsgeometrien. Durch die nachfolgend beschriebene Erfindung sollen Ausfälle von Anlagen infolge mangelhafter, durch Extremtemperaturen geschädigter, Bestandteile der Anlage, verringert und vermieden werden.

Insbesondere durch aktive Kühler wie Lüfter, Peltier-Elemente, oder dergleichen wird eine direkte, also aktive Kühlung erreicht, ohne die Nachteile, die die Zusatzapparaturen bei einer reinen Flüssigkeitskühlung erfordern, in Kauf nehmen zu müssen. Auch fettgeschmierte Teile werden dadurch direkt kühlbar. Die direkte Steuerung der Kühlleistung erfolgt dabei durch die definierte Bestromung der elektrotechnischen Beschaltung der erfindungsgemäßen Anordnung, oder durch die Beaufschlagung der erfindungsgemäßen Anordnung mit einer definierten, beispielsweise geeignet gesteuerten oder geeignet geregelten, elektrischen Spannung.

Es ist gut denkbar, diese elektrothermisch verursachte aktive Kühlwirkung mit der aktiven Kühlwirkung durch ein durchströmendes Medium, beispielsweise einer Flüssigkeit oder eines fließenden Gemischs, zu verstärken, wenn zeitgleich eventuelle Probleme der elektrischen Isolation gelöst sind.

Als aktive Beheizung für Großwälzlager, Lager und allgemeine Drehverbindungen des Maschinen- und Anlagenbaus, die auch in Schwenktrieben eingesetzt werden können zu nennen ist jede definierte elektrische Beheizung einer Anordnung oder Apparatur, die mittels geeigneter Bestromung von Heizelementen erfolgt.

Es ist ebenfalls gut denkbar, diese elektrothermisch verursachte aktive Heizwirkung mit der aktiven Heizwirkung eines durchströmenden Mediums, das wärmer ist als die Temperatur der durchströmten Teile, beispielsweise einer Flüssigkeit oder eines fließenden Gemischs, zu verstärken, wenn zeitgleich eventuelle Probleme der elektrischen Isolation gelöst sind.

Die Lösung der zum Nachteil gereichenden Probleme gemäß dem herkömmlichen Stand der Technik gelingt in erster Näherung, wenn in einer ersten Stufe zusätzliche Bohrungen auf den Innenring oder Außenring der Drehverbindung eingebracht werden, oder Einstiche auf dem Umfang des Innenrings oder Außenrings eingebracht werden. Ziel dieser Maßnahmen ist es, die Wärmeabfuhr aus der Drehverbindung durch Luftkonvektion zu erhöhen/ verbessern. Diese Maßnahme kann als zusätzliche Kühlungsmaßnahme zur folgend beschriebenen direkten Kühlungsmaßnahme eingesetzt werden. Wenn zusätzlich zu diesen am Umfang entlanglaufenden Einstichen ein ringförmiger Mantel um die Drehverbindung angebracht wird, welcher die Einstiche strömungsdicht, insbesondere wasserdicht, verschließt, so kann durch diese Einstiche ein Wärmeaustauschmedium geleitet werden.

Die Lösung gelingt vor Allem dann, wenn das Lager (Großwälzlager, Drehverbindung, Schwenktrieb, et cetera) zusätzlich mit Kühl- und Heizelementen versehen wird, welche elektrisch betrieben werden. Weiter oben angesprochen wurden schon Heizdrähte, jedoch ist auch die vorteilhafte Verwendung von elektrothermischen Wandlern und/ oder die Nutzbarmachung thermoelektrischer Effekte denkbar, beispielsweise in der bekannten Anwendungsform der sogenannten Peltier-Elemente oder Peltier-Kühler. Derartige Heiz- oder Kühlelemente können sowohl in Einstichen oder anderen Materialaussparungen, als auch im Dichtungsspalt zwischen den Lagerhälften, oder auf Planflächen an Innenring und/ oder Außenring, oder gegebenenfalls sogar in den Laufbahnen der Gesamtanordnung eingebracht werden.

Ein solcher elektrothermischer Wandler basiert vorzugsweise auf dem Peltier-Effekt und generiert bei Stromdurchfluss eine Temperaturdifferenz oder auch bei Temperaturdifferenz einen Stromfluss (Seebeck-Effekt). Werden derartige Elemente auf einer Teilpartie oder Fläche des Lagers (Großwälzlagers, Drehverbindungs, Schwenktriebs, et cetera) angebracht, so kann selbiges Lager (Großwälzlager, Drehverbindung, Schwenktrieb, et cetera) sowohl gekühlt, als auch beheizt werden. Der Unterschied zwischen Beheizung, bewirkend einen definierten Wärmeeintrag, oder Kühlung, bewirkend einen definierten Wärmeabtrag, liegt in der Beschaltung der elektrischen Pole des elektrothermischen Wandlers. Die erfindungsgemäße Anordnung beinhaltet eine geeignete Beschaltung des elektrothermischen Wandlers, sodass als Resultat das Lager (Großwälzlager, Drehverbindung, Schwenktrieb, et cetera) entweder gekühlt, oder - etwa bei Stromrichtungsumkehr - beheizt werden kann.

Eine weitere, zusätzliche Stufe zur Abfuhr von in der Drehverbindung oder im Lager entstehender Wärme ist das Fluten/ Befüllen der Drehverbindung oder des Großwälzlagers (oder des Schwenktriebes) mit einem Kühl- oder Heizmedium, nachfolgend vereinfachend auch Medium oder Wärmeaustauschmedium genannt, wie beispielsweise Wasser, Luft, Öl oder einem schwer entzündlichen Gasgemisch. Hierzu werden entweder auf dem Umfang des Außenrings oder des Innenrings Materialaussparungen eingebracht, welche mit einer mantelförmigen Komponente, beispielsweise ein die Drehverbindung oder ein das Lager umhüllendes Hohlteil, auch Mantelteil genannt, umschlossen werden. Durch diese Materialaussparungen (Ringkammern, Ringsegmente, Ringnut, ringförmige Einstiche, Mäanderförmige Tunnel, umlaufende Bohrungen, et cetera) wird ein Kühlmedium zur Wärmeabfuhr, oder aber ein Heizmedium zum Wärmeeintrag, geleitet.

Es ist denkbar, dass auf der Umlauffläche der Gesamtanordnung mehrere umlaufende Materialaussparungen eingebracht werden können, oder aber eine einzige spiral- oder schraubengewindeartig umlaufende Materialaussparung eingebracht ist. Sofern eine einzige umlaufende Materialaussparung eingebracht ist, so hat diese einen zumindest einen definierten Einlassort des Wärmeaustauschmediums, als auch zumindest einen definierten Auslassort des Wärmeaustauschmediums. Sofern mehrere umlaufende Materialaussparungen eingebracht sind, so können diese parallel und strömungsphysikalisch unabhängig voneinander mit jeweils einem definierten Einlassort und jeweils einem Auslassort versehen sein.

Es besteht vorzugsweise auch die Möglichkeit diese derartigen Materialaussparungen anzubringen und zusätzlich mit Heizdrähten auszustatten, sodass ein, gegebenenfalls zusätzlicher, Beheizungseffekt infolge der Heizwirkung durch elektrische Durchströmung geschieht. Analog gesehen kann man diese Materialaussparungen auch mit Peltier-Elementen ausstatten.

Praktisch gesehen ist es so, dass heutige Wälzlager, Großwälzlager, Drehverbindungen, in Schwenktrieben eingesetzte Drehverbindungen, häufig über eine Füllbohrung verfügen, durch die in der Praxis das Befüllen des Laufbahnsystems mit Wälzkörpern geschieht. Bezogen auf die vorliegende Erfindung ist jene Füllbohrung vorzugsweise dann von der Medienumströmung geometrisch abgegrenzt, somit ausgenommen und gegen Austritt des Wärmeaustauschmediums abgedichtet. Alternativ hierzu kann auch nur oberhalb oder unterhalb der Füllbohrung ein Kanal oder eine Materialaussparung für das Wärmeaustauschmedium angebracht sein. Über Bohrungen im mantelförmigen Teil, oben beispielhaft als Einlassort und Auslassort bezeichnet, kann das Wärmeaustauschmedium zugeführt und abgeführt werden.

Zweckmäßigerweise liegen diese Bohrungen nahe beieinander, sodass durch eine einfach eingebrachte Barriere zwischen den Bohrungen, beispielsweise durch Anbringung eines anderen Materials, der Fluss des Mediums um das ganze ringförmige Lager ermöglicht wird. Die Materialaussparungen, durch die das Medium ringförmig das Lager durchfließt, können im Mantelteil eingebracht sein und auch mäanderförmig, spiralförmig, ausgestaltet sein.

Diese Materialaussparungen können erfindungsgemäß auch in mehreren ringförmigen Lagen, in mehreren Ebenen und in jeweils unterschiedlicher Eindringtiefe in das Material des Großwälzlagers, des Lagers, der Drehverbindung oder des Schwenktriebes eingebracht werden und dann vorhanden sein. Diese Materialaussparungen können prinzipiell auch als axiale Bohrungen/ Nuten/ Einstiche vorhanden sein.

In einer weiteren Ausführungsform können auch von Bohrungen in das Lager eingebracht sein, die durch Verbindungskanäle, Rohre, oder ähnlichem, nachfolgend auch Verbindungsstücke genannt, so verbunden sind, dass sich zwangsweise ein Durchfluss des Lagers, Großwälzlagers, Schwenktriebes ö.Ä. ergibt.

Diese Bohrungen können vorteilhafterweise auch mit einer ringförmigen Materialaussparung (Nut, Einstich, et cetera) verbunden sein, in welche die Verbindungsstücke so eingebracht sind, dass sie nicht über die Planfläche des Lagers (Großwälzlagers, Drehverbindung, Schwenktriebes, et cetera) hinausragen, somit besonders (weil innen liegend) geschützt sind, und das Lager mit dieser Fläche auch auf der Anschlusskonstruktion, die dem Lager (Großwälzlagers, Schwenktriebes, et cetera) geometrisch folgt, aufliegen und mit Schrauben wie üblich befestigt werden kann.

An den Planflächen können, damit eine definierte Durchflussrichtung des Mediums erzeugt wird, in einer besonderen Ausführungsform ebenso Segmente mit filigranen Strukturen, die beispielsweise durch Laserbearbeitung, eingebracht werden, mit entsprechenden Ausnehmungen bzw. Materialaussparungen angebracht sein. Eine erste Ebene solcher Segmente kann so gestaltet sein, dass immer zwei Bohrungen bzw. Durchflusslöcher miteinander verbunden sind, während in einer zweiten Ebene diese Ausnehmungen bzw. Materialaussparungen abgedeckt sind, damit ein oder mehrere Zu- und Abführbohrungen vorhanden sind die das Medium in das Lager (Großwälzlager, Drehverbindung Schwenktrieb, et cetera) einleiten und ausleiten.

Sofern nur eine Unterkühlung des Lagers (Großwälzlagers, der Drehverbindung, des Schwenktriebes, et cetera) vermieden werden soll, können anstatt des elektrothermischer Wandlers wie oben genannt auch konventionelle elektrische Heizelemente (Heizdrähte, Heizwendel, Heizspiralen, et cetera) eingesetzt werden. Entgegen dem vorbekannten Stand der Technik ist jedoch dann im Sinne der Erfindung zweckmäßig, wenn diese Elemente in entsprechenden Ausnehmungen bzw. Materialaussparungen auf dem Umfang eines Lagerringes angebracht wird, oder aber auf mindestens einer Planfläche angebracht werden.

Weitere Merkmale, Eigenschaften, Vorteile und Wirkungen auf der Grundlage der Erfindung ergeben sich aus den folgenden Beschreibungen einer bevorzugten Ausführungsform der Erfindung, sowie weiteren naheliegenden vorteilhaften Ausgestaltungen der Erfindung, sowie anhand der Zeichnungen. Selbstverständlich ist auch die Kombination mehrerer der oben genannten erfindungsgemäßen Systeme möglich. Hierbei zeigen:
Fig. 1 Stirnfläche eines geschnittenen Lagers bzw. mehrerer geschnittener Drehteile (Großwälzlager, Drehverbindung, Schwenktrieb).
Fig. 2 Stirnfläche eines geschnittenen Lagers bzw. mehrerer geschnittener Drehteile (Großwälzlager, Drehverbindung, Schwenktrieb) mit in die Materialaussparung beispielhaft eingebrachte Elemente zum direkten Beheizen oder Kühlen.
Fig. 3 Stirnfläche eines geschnittenen, erfindungsgemäßen Lagers bzw. mehrerer geschnittener Drehteile (Großwälzlager, Drehverbindung, Schwenktrieb) mit anschließender Mantelkonstruktion und Befüllbohrungen
Fig. 4 Stirnfläche eines geschnittenen, erfindungsgemäßen Lagers bzw. mehrerer geschnittener Drehteile (Großwälzlager, Drehverbindung, Schwenktrieb) mit anschließender Mantelkonstruktion und Befüllbohrungen und zusätzlich mit in die Materialaussparung oder Laufbahn beispielhaft eingebrachte Elemente zum direkten Beheizen oder Kühlen.
Fig. 5 Ansicht eines geschnittenen, erfindungsgemäßen Lagers, z.B. : Innenring oder Außenring, mit axial angebrachten Materialaussparungen, im Verbund mit Lochplatten und Abschlussplatten eine strömungsfähige Gesamtkonstruktion ergebend.
Fig. 6 Seitenansicht eines geschnittenen, erfindungsgemäßen Lagers, z.B. : Innenring oder Außenring, mit axial angebrachten Materialaussparungen, im Verbund mit Lochplatten und Abschlussplatten eine strömungsfähige Gesamtkonstruktion ergebend und zusätzlich mit in die Materialaussparung beispielhaft eingebrachte Elemente zum direkten Beheizen oder Kühlen.
Fig. 7 Seitenansicht eines geschnittenen, erfindungsgemäßen Lagers, z.B. : Innenring oder Außenring, im Verbund mit Lochplatten und Abschlussplatten eine strömungsfähige Gesamtkonstruktion ergebend.
Fig. 8 Seitenansicht eines geschnittenen, erfindungsgemäßen Lagers, z.B. : Innenring oder Außenring, im Verbund mit Lochplatten und Abschlussplatten eine strömungsfähige Gesamtkonstruktion ergebend, und zusätzlich mit in die Materialaussparung beispielhaft eingebrachte Elemente zum direkten Beheizen oder Kühlen.

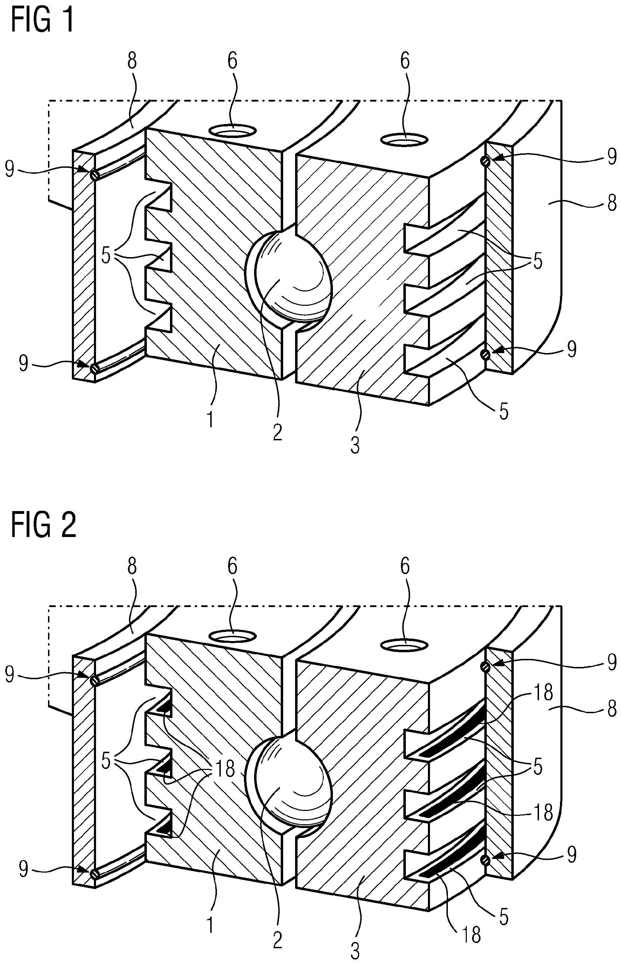

In Fig. 1 gut sichtbar dargestellt ist die geschnittene Stirnfläche eines Ringsegmentes einer Drehverbindung, bestehend aus einem Außenring 3 und einem Innenring 1, dazwischen die Laufbahn für die Wälzkörper 2, beispielsweise für Kugeln mit oder ohne Wälzkörperkäfig. Gut sichtbar sind am Außenumfang des Innenrings 1 und des Außenrings 3 eingebrachte Materialaussparungen 5, hier als Einstiche oder umlaufende Nuten dargestellt. Durch diese Nuten/ Materialaussparungen kann das Wärmeaustauschmedium Luft, Öl, Wasser oder ein schwer entzündliches Gasgemisch strömen. Die Materialaussparungen 5 sind deshalb als Strömungskanal oder Strömungskanäle ausgebildet und in einem nach außen gerichteten Randbereich des Außenrings 3 sowie in einem nach innen gerichteten Randbereich des Innenrings 1 vorgesehen.

Dadurch wird aktive oder direkte Kühlung oder Beheizung der Gesamtanordnung, insbesondere der Ringe, erreicht je nachdem, ob das Wärmeaustauschmedium eine geringere oder höhere Temperatur besitzt als die Gesamtanordnung.

Unter aktiver Kühlung soll hier insbesondere verstanden werden, dass mittels eines Lüfters oder einer Pumpe ein Kühlmittelstrom eines Kühlmittels wie z.B. Luft, ÖI, Wasser oder ein schwer entzündliches Gasgemisch, erzeugt wird, der das zu kühlende Bauteil kühlt. Hierzu kann das Kühlmittel durch einen Wärmetauscher geführt werden um das Kühlmedium auf eine Ausgangstemperatur zu bringen, die niedriger ist, als die Temperatur des zu kühlenden Bauteils.

Unter Beheizung soll hingegen insbesondere verstanden werden, dass das zu heizende Bauteil aktiv beheizt wird, beispielsweise durch eine Beheizung eines Wärmeaustauschmediums, welches das zu heizende Bauteil erwärmt, oder auch durch direkt auf dem zu heizenden Bauteil aufgebrachte Heizelemente.

Das genannte Wärmeaustauschmedium kann zugleich je nachdem ob gekühlt oder beheizt wird als Kühlmittel oder als Heizmittel dienen.

Insbesondere werden bei der aktiven Kühlung und der aktiven Beheizung die Prinzipien der Wärmeleitung und der erzwungenen Konvektion verwirklicht.

Wird ein solches Wärmeaustauschmedium verwendet, so muss selbiges wasserdicht oder gasdicht oder zumindest strömungsdicht durch die strömungskanalartigen Materialaussparungen 5 geleitet werden. Dies ist gut dann möglich, wenn entsprechende Dichtungsvorrichtungen 9, insbesondere umlaufende und ganzheitlich abdichtende Dichtungen 9 verwendet werden. Ziel der Dichtung es, das Austreten des Strömungsmediums aus den Strömungskanälen, beispielsweise den Materialaussparungen 5 zu vermeiden oder zumindest maßgeblich zu verhindern. Die Dichtungen 9 sind hierbei jeweils in einer Nut eines mantelförmigen Teils 8 angeordnet. Jeweils ein mantelförmiges Teil 8 ist dem Außenring 3 zugeordnet und verläuft entlang der nach außen gerichteten Fläche des Außenrings 3, wobei die Dichtungen 9 an der nach außen gerichteten Fläche des Außenrings 3 dichtend anliegen und in ihrer Position fixiert sind. Entsprechend ist ein weiteres mantelförmiges Teil 8 dem Innenring 3 zugeordnet und verläuft entlang der nach innen gerichteten Fläche des Innenrings 3. Durch die Zusammenwirkung, insbesondere bei einem festen Sitz der mantelförmigen Teile 8 auf Innenring 1 und Außenring 3, entsteht nach der Umgebung hin dichte Strömungskanäle zur Durchleitung des Wärmetauschmediums.

Wenn auf die mantelförmigen Teile 8, hier ausgeführt als zwei umlaufende Ringe 8 angebracht an Innenring 1 und Außenring 3, verzichtet wird, so ist ein gezieltes Durchströmen der Anordnung mit dem Wärmeaustauschmedium nicht mehr möglich. Dann begründen die Materialaussparungen 5 den indirekten Effekt der Wärmekonvektion, da diese Einstiche 5 in Verbindung mit den Umfangsflächen von Innenring 1 oder Außenring 3 eine kühlrippenähnliche Geometrie bilden. Ebenso wie die vorgenannten Materialaussparungen 5 können die Bohrungen 6 im Vollmaterial des Innenrings 1 und/oder des Außenrings 3 sowohl zur Durchleitung eines Wärmeaustauschmediums genutzt werden, als auch als Kühlbohrungen im Sinne der Förderung einer besseren Wärmekonvektion.

Fig. 2 zeigt beispielhaft einige Stellen der Anordnung (Lager, Wälzlager, Drehverbindung, Schwenktrieb), an welchem Elemente 18 zum direkten Kühlen oder Beheizen der Anordnung angebracht werden können. Insbesondere an allen Stellen innerhalb der umlaufenden Materialaussparungen 5 können solche Elemente liegen, beispielsweise in den umlaufenden Einstichen des Innenrings 1 und/oder des Außenrings 3, oder aber auch im Inneren der Bohrungen 6. Natürlich können diese Elemente 18 auch auf Planflächen der Mantelteile 8 liegen, oder an geeigneten Flächen des Lagerspaltes zwischen den gegeneinander verdrehbaren Ringen 1 und 3.

Bei Anbringung von umlaufenden Materialaussparungen 5 in die Gesamtanordnung entfällt die Notwendigkeit, untere und obere Lochscheiben 12, 13 als auch untere und obere Abschlussplatten 10, 11 verwenden zu müssen, die zur Vorgabe der Strömungsvorzugsrichtung 16 des Wärmeaustauschmediums maßgeblich erforderlich sind. Genauer gesagt sind die Materialaussparungen 5 gemäß Fig. 1 und Fig. 2 in Umfangsrichtung angeordnet, so dass drei parallel verlaufende Strömungskanäle gebildet sind und das Wärmeaustauschmedium ausschließlich in Umfangsrichtung geleitet wird.

Es ist auch denkbar, diese Elemente 18, die insbesondere Heizdrähte sein können, oder Peltier-Elemente oder andere elektrothermische Wandler, an den Flächen der die Drehverbindung begrenzenden Scheiben oder Platten 10, 11, 12, 13 anzubringen. Bei geeigneter Anordnung der Elemente 18 kann sowohl das zu heizende Bauteil, also Innenring 1 und/oder Außenring 3 beheizt werden, als auch das Wärmetauschmedium welches die Strömungskanäle durchströmt.

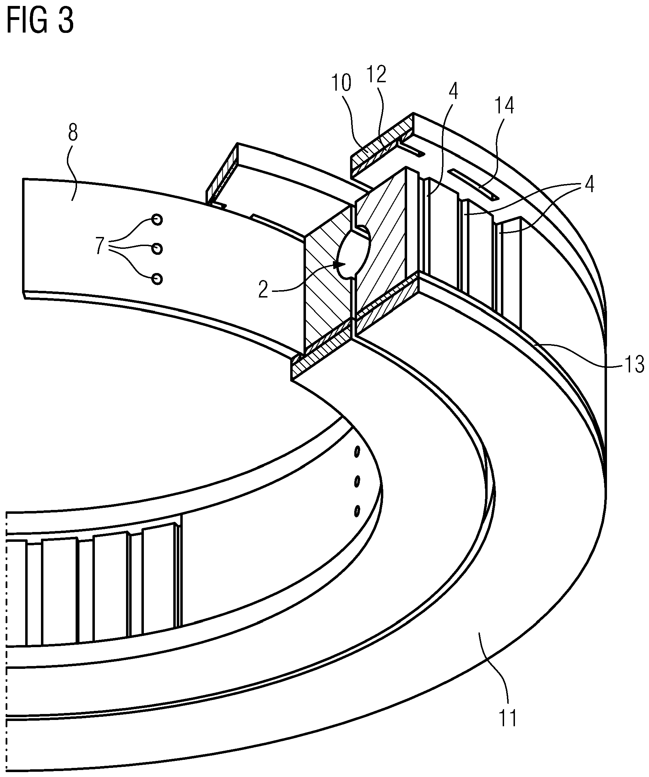

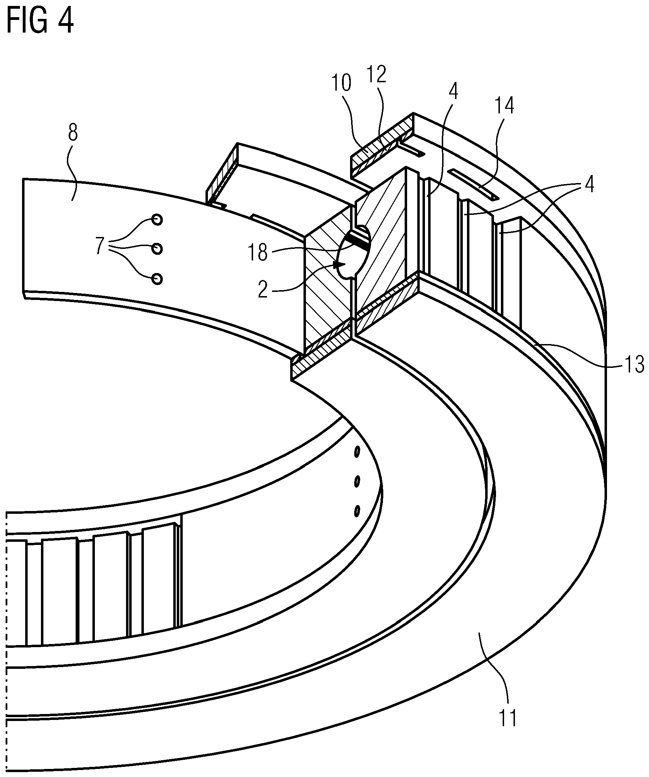

In Fig. 3 und Fig. 4 ist perspektivisch gezeigt eine erfindungsgemäße Anordnung diese begrenzenden Scheiben oder Platten 10, 11, 12, 13, die dann insbesondere eingesetzt werden, wenn die Materialaussparungen als Strömungskanäle für ein durchströmendes Wärmeaustauschmedium dienen. Durch die Wahl der Geometrie des Strömungskanals, und durch die Anordnung der Materialaussparungen ist es möglich, dem Strömungsmedium eine Vorzugsströmungsrichtung 16 zu geben. Wenn die erfindungsgemäße Beheizung/Kühlung der Anordnung durch ein Wärmeaustauschmedium erfolgt ist es stets nötig, das Strömungsmedium im Inneren der Anordnung zu halten. An definierten Einlass- oder Auslass Befüllbohrungen 7 kann das Medium die Anordnung verlassen oder in die Anordnung, beispielsweise in den Innenring 1 oder den Außenring 3 eintreten. Ist eine Pumpe zum Erzeugen einer Strömung des Wärmeaustauschmediums vorgesehen, so wird durch die Pumprichtung die Vorzugsströmungsrichtung 16 vorgegeben.

In Fig. 3 und Fig. 4 gut zu erkennen sind im Gegensatz zu den umlaufenden Materialaussparungen 5 angebrachte axiale Materialaussparungen 4. Bei Verwendung solcher axialer Aussparungen 4, die beispielsweise durch fräsende Bearbeitung in der Herstellung eines solchen Rings hineingebracht werden können, ist es nötig, die Strömungsvorzugsrichtung 16 für das Wärmeaustauschmedium vorzugeben, indem strömungskanalartige Geometrien vorgegeben werden. Die Verbindung aus Grundkörper wie Innenring 1 oder Außenring 3 mit Lochscheiben 12, 13 und Abschlussplatten 10, 11 schafft eine geeignete strömungskanalartige Geometrie, wie in Fig. 3 bis Fig. 8 erkannt werden kann. Dabei sind erfindungsgemäß mehrere, beispielsweise kreisförmig umlaufende, Strömungskammern 14, 15 vorhanden, die ein Durchströmen des Wärmeaustauschmediums ermöglichen. Die Strömungskammern 14, 15 verlaufen dabei in Umfangsrichtung und bilden mit den in axialer Richtung verlaufenden Materialaussparungen 4 einen mäanderförmigen oder serpentinenförmigen Strömungskanal. Gegenüber ausschließlich parallel verlaufenden Strömungskanälen, weisen mäanderförmige oder serpentinenförmige Strömungskanäle eine wesentlich größere Gesamtlänge und somit eine wesentlich größere durch das Wärmetauschmedium angeströmte Wandungsfläche auf. Durch eine größere angeströmte Wandungsfläche des Strömungskanals ist die Kühlwirkung, bzw. Heizwirkung größer, da die Wärmeübertragungsleistung direkt proportional zur Übertragungsfläche ist.

Fig. 4 zeigt, dass Elemente 18 zur Beheizung oder Kühlung in geeigneter Weise an Wandungen der Kugel- oder Wälzlagerbahn angeordnet sein können. Eine solche Anordnung ist besonders vorteilhaft, da Kühlung, bzw. Erwärmung direkt benachbart an dem Ort eingesetzt werden kann, wo Reibung zwischen den Wälzkörpern und den Ringen des Lagers auftritt.

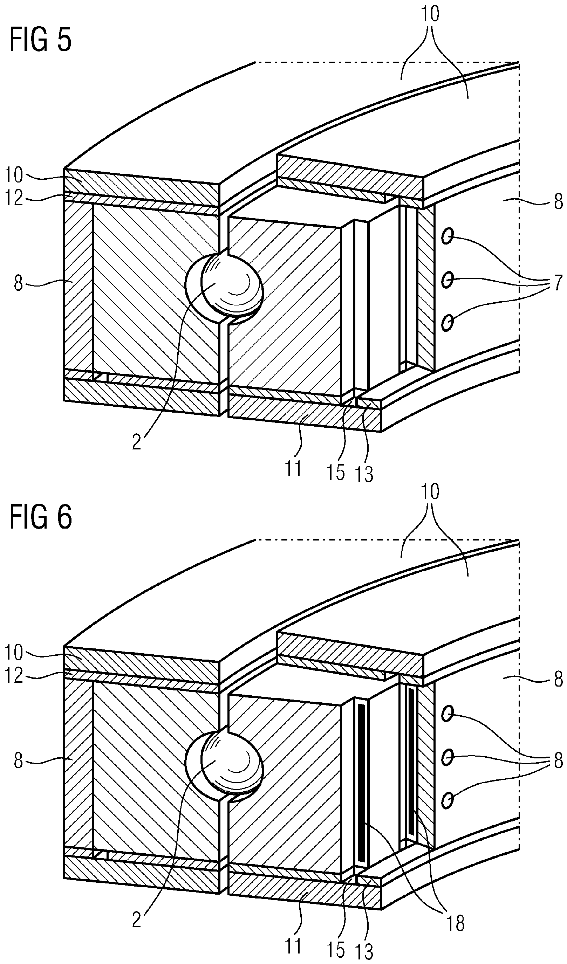

In Fig. 5 und Fig. 6 gut zu erkennen ist, dass diese Strömungskammern durch geeignete Ausnehmungen in den sogenannten Lochscheiben 12, 13 realisiert werden. Auf beiden Seiten der Ringe, also unterhalb des Innenrings 1 und Außenrings 3, als auch oberhalb des Innenrings 1 und Außenrings 3, sind erfindungsgemäß solche Strömungskammern vorhanden. Auf die Lochscheiben 12, 13 sind jeweils eine obere Abschlussplatte 10 und eine untere Abschlussplatte 11 aufgesetzt. Diese bilden einen oberen, bzw. unteren Verschluss der in Umfangsrichtung verlaufenden oberen, bzw. unteren Strömungskammer 14, 15.

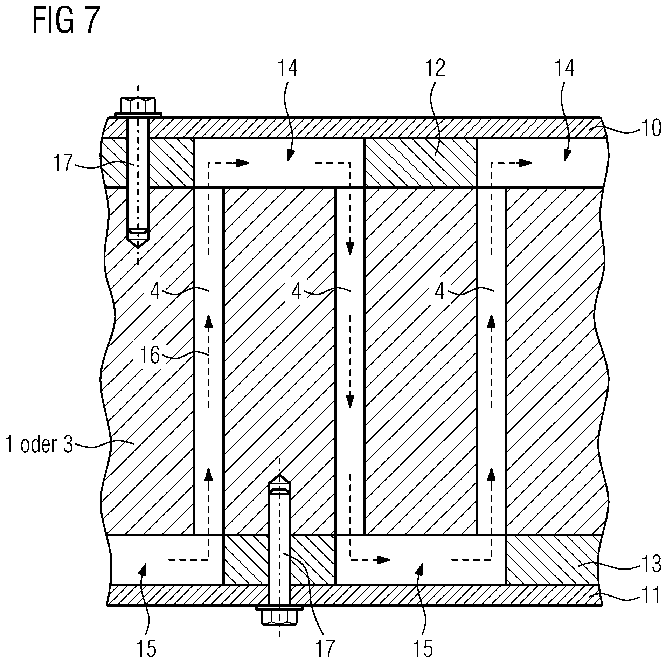

Fig. 7 zeigt eine geschnittene Darstellung eines mäanderförmigen oder serpentinenförmigen Strömungskanals. Die obere und die untere Abschlussplatte 10, 11 sind jeweils über eine Schraubverbindung 17 mit der oberen Lochscheibe 12, bzw. der unteren Lochscheibe 13 an einem der Ringe 1, 3 befestigt. Die axial verlaufenden Strömungskammern 4 sind dabei in strömungstechnischer Verbindung mit den in Umfangsrichtung verlaufenden oberen und unteren Strömungskammern 14, 15 und formen so einen mäanderförmigen oder serpentinenförmigen Strömungskanal. Ein derartiger Strömungskanal weist eine sehr große Wärmeübertragungsfläche auf und ist gleichzeitig äußerst dicht. Eine mögliche Vorzugsströmungsrichtung 16 ist bezeichnet.

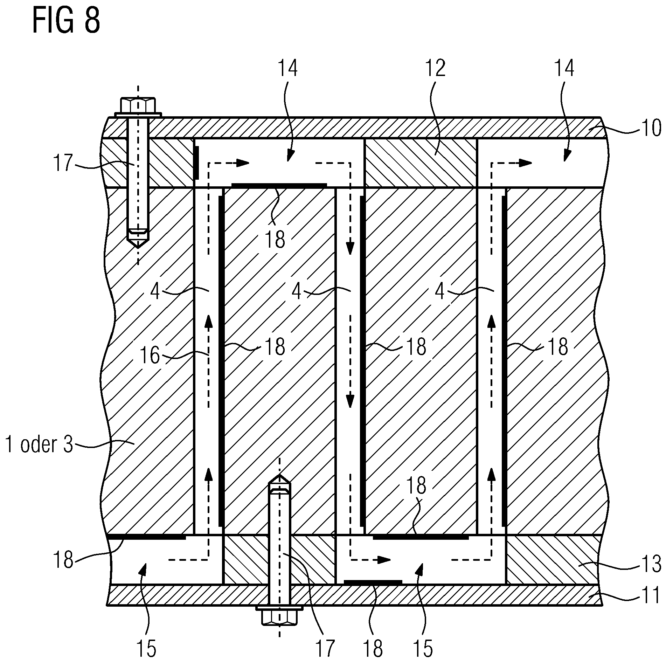

Fig. 8 zeigt einen Strömungskanal entsprechend Fig. 7, wobei Elemente zur aktiven Kühlung oder Beheizung vorgesehen sind. Diese sind insbesondere vorteilhaft an den Wandungen der axial verlaufenden Materialaussparungen angeordnet, wodurch eine energetisch besonders effiziente Kühlung, bzw. Beheizung ermöglicht ist. Hierbei können gleichzeitig Ring und Wärmeaustauschmedium gekühlt, bzw. beheizt werden, so dass ein sehr hoher Wirkungsgrad erzielt wird.

In Fig. 3 bis Fig. 8 sind erfindungsgemäße Beispiele zur Schaffung einer Gesamtanordnung (eines Lagers oder Wälzlagers oder einer Drehverbindung oder eines Schwenktriebs) mit integrierter Kühlung und/oder Heizung dargestellt. Es ist abschließend zu erwähnen, dass selbstverständlich jedes einzelne dieser Gesamtanordnungen separat mit weiterführender elektrischer Beschaltung verbunden sein kann. Es ist auch denkbar, dass mehrere Gesamtanordnungen an mit einer einzigen Gesamtanlage zur elektrischen Beschaltung sequentiell oder parallel verbunden sind. Es ist auch denkbar, dass mehrere solcher einzelnen Gesamtanordnungen parallel oder sequentiell mit mindestens einem Strömungsapparat verbunden werden, der für die Beschickung mit Wärmeaustauschmedium sorgt. Ein solcher Strömungsapparat kann ein Lüfter, Ventilator sein, oder eine Flüssigkeitspumpe oder Ölpumpe, oder ein anderer Medien- oder Fluidförderer zur strömenden Beschickung von Anlagenteilen mit einem Kühl- oder Heizmedium.

Zusätzlich zu Vorgenanntem ist festzustellen, dass die erfindungsgemäße Vorrichtung, nebst gezeigten Beispielen, auch jegliche andere Geometrie umfasst, welche geeignet ist, einem Lager, (Groß-)wälzlager, einer Drehverbindung oder einem Schwenktrieb eine Durchströmung eines Wärmeaustauschmediums mit Vorzugsrichtung zu ermöglichen, wenn diese Durchströmung sowohl zur direkten Beheizung oder zur direkten Kühlung dienen kann.

### Bezugszeichenliste

1 Erste verdrehbare Komponente (Drehkörper), z.B: Innenring (IR)
2 Kugel- oder Wälzkörper
3 Zweite verdrehbare Komponente (Drehkörper), z.B.: Außenring (AU)
4 Materialaussparungen, z.B.: axial
5 Materialaussparungen, z.B.: umlaufend
6 Bohrung
7 Befüllbohrung für Wärmeaustauschmedium
8 mantelförmiges/ ummantelndes Teil
9 umlaufende Dichtung
10 Obere Abschlussplatte
11 Untere Abschlussplatte
12 Obere Lochscheibe
13 Untere Lochscheibe
14 Obere Strömungskammer
15 Untere Strömungskammer
16 Vorzugs-Strömungsrichtung des Wärmeaustauschmediums (Beispiel)
17 Geeignete Befestigung zur Fixierung der Gesamtanordnung, z.B.: Schraubverbindung
18 In Materialaussparungen eingebrachte oder in Bohrungen oder auf Flächen oder an der Laufbahn angebrachte Elemente zur aktiven Kühlung oder Beheizung der Gesamtanordnung, z.B.: Heizdrähte, elektrothermische Wandler und/ oder Peltier-Elemente.

## Patentansprüche

1. Lageranordnung, umfassend
- wenigstens zwei ringförmige Komponenten (1, 3) die relativ zueinander um eine Drehachse rotierbar sind, wobei
- eine Mehrzahl an Wälzkörpern (2) zwischen den ringförmigen Komponenten (1, 3) angeordnet ist, die diese bei einer Rotation relativ zueinander gegeneinander abstützt, **dadurch gekennzeichnet, dass**
zur Beheizung und/oder Kühlung wenigstens einer der ringförmigen Komponenten (1, 3) eine Mehrzahl von Materialaussparungen (4) in axialer Richtung an wenigstens einer ringförmigen Komponente (1, 3) vorgesehen ist, welche zumindest einen Abschnitt eines Strömungskanals ausbildet,
wobei
- an der wenigstens einen ringförmigen Komponente (1, 3)
(i) wenigstens ein mantelförmiges Teil (8) und
(ii) wenigstens eine obere Abschlussplatte (10) und/oder wenigstens eine untere Abschlussplatte (11) festgelegt ist, welche eine strömungstechnische Begrenzung des Strömungskanals gegenüber der Umgebung bilden,
und wobei
- jeweils zwischen der ringförmigen Komponente (1, 3) und der jeweiligen Abschlussplatte (10, 11) Lochscheiben (12, 13) vorgesehen sind, die Strömungskammern (14, 15) ausbilden, die die Materialaussparungen (4) in Umfangsrichtung miteinander strömungstechnisch verbinden.

2. Lageranordnung nach Anspruch 1, **dadurch gekennzeichnet, dass** die Materialaussparungen (4) in axialer Richtung mit wenigstens einer Materialaussparung (5) in Umfangsrichtung in strömungstechnischer Verbindung stehen.

3. Lageranordnung nach einem der Ansprüche 1 oder 2, **dadurch gekennzeichnet, dass** die Strömungskammern (14, 15) die in axialer Richtung angeordneten Materialaussparungen (4) in Umfangsrichtung miteinander strömungstechnisch so verbinden, dass ein mäanderförmiger oder serpentinenförmiger Strömungskanal geformt ist.

4. Lageranordnung nach einem der vorhergehenden Ansprüche, **dadurch gekennzeichnet, dass** obere Abschlussplatte (10) und/oder untere Abschlussplatte (11) und/oder mantelförmiges Teil (8) wenigstens eine Befüllvorrichtung, vorzugsweise wenigstens eine Befüllbohrung aufweisen, über welche Wärmeaustauschmedium dem Strömungskanal zugeführt und von diesem abgeführt werden kann.

5. Lageranordnung nach einem der vorhergehenden Ansprüche, **dadurch gekennzeichnet, dass** zur Beheizung und/oder Kühlung Elemente (18) zur Beheizung und/oder Kühlung vorgesehen sind, insbesondere Heizdrähte, elektrothermische Wandler und/oder Peltierelemente, wobei die genannten Elemente (18) an Wandungen der Materialaussparungen (4, 5) angeordnet sind, und/oder an oder benachbart zur Wälzkörperlaufbahn (2) angeordnet sind.

6. Lageranordnung nach einem der vorhergehenden Ansprüche, **dadurch gekennzeichnet, dass** auf dem Umfang wenigstens einer der gegeneinander verdrehbaren Komponenten (1, 3) oder auf Planflächen der Gesamtanordnung vorhandene Materialaussparungen (4, 5) ringförmig, ringkammerförmig oder ringsegmentförmig oder ringnutförmig oder einstichförmig, oder mäanderförmig ausgeführt sind oder eine daraus kombinierte Geometrie besitzen oder in mehreren Ebenen, insbesondere konzentrischen Ebenen unterschiedlichen Durchmessers, vorhanden sind.

7. Lageranordnung nach einem der vorhergehenden Ansprüche, **gekennzeichnet durch** eine Vorrichtung zur integrierten Beheizung oder Kühlung der Lageranordnung mit einer Steuerungs- und/oder Regelungseinrichtung zur Steuerung und/oder Regelung der Beheizung und/oder Kühlung, welche eine Umschaltung zwischen Beheizung und Kühlung ermöglicht.

8. Verfahren zur integrierten Beheizung oder Kühlung einer Lageranordnung nach einem der Ansprüche 1 bis 7, **dadurch gekennzeichnet, dass** der direkte Wärmeeintrag in wenigstens eine der ringförmigen Komponenten (1, 2) oder die direkte Wärmeabfuhr aus wenigstens einer der Komponenten (1, 3) definiert gesteuert oder geregelt wird.

9. Verfahren nach Anspruch 8, **dadurch gekennzeichnet, dass** die Temperatur wenigstens einer ringförmigen Komponente (1, 3) in Abhängigkeit von der Umgebungstemperatur auf eine gewünschte Betriebstemperatur eingestellt wird, vorzugsweise auf eine Betriebstemperatur, die an eine vorbestimmte günstige Temperatur eines eingesetzten Schmiermittels angepasst ist.

10. Verfahren nach Anspruch 8 oder 9, **dadurch gekennzeichnet, dass** zwischen einem Wärmeeintrag und einer Wärmeabfuhr umgeschaltet wird.

11. Verfahren nach Anspruch 10, **dadurch gekennzeichnet, dass** die Umschaltung zwischen Wärmeeintrag und Wärmeabfuhr durch elektrische Signale bewirkt wird oder durch Invertierung elektrischer Ansteuerungen von elektrischen Baugruppen, insbesondere ausschließlich durch ein elektrisches Signal oder durch Invertierung der elektrischen Ansteuerung einer elektrischen Baugruppe.

12. Verfahren nach einem der Ansprüche 10 oder 11, **dadurch gekennzeichnet, dass** die Umschaltung zwischen Wärmeeintrag und Wärmeabfuhr durch eine Temperaturänderung des durch diese Anordnung fließenden oder strömenden Wärmeaustauschmediums bewirkt wird, insbesondere durch eine kontinuierliche oder rapide Temperaturerhöhung oder Temperaturverringerung des Wärmeaustauschmediums.

13. Verfahren nach einem der Ansprüche 8 bis 12, **dadurch gekennzeichnet, dass** der Wärmeeintrag und/oder die Wärmeabfuhr durch zusätzliche, indirekt heizende oder indirekt kühlende Elemente (18) verstärkt wird, welche auf Flächen oder in Materialaussparungen (4, 5) oder Bohrungen (6) der gegeneinander verdrehbaren Komponenten (1, 3) angeordnet sind oder im Lagerspalt.

14. Verfahren nach einem der Ansprüche 8 bis 13, **dadurch gekennzeichnet, dass** das Wärmeaustauschmedium in einer Vorzugs-Strömungsrichtung (16) durch den Strömungskanal geleitet wird, wobei die Vorzugs-Strömungsrichtung (16) geändert werden kann, insbesondere von einer Steuerungs- und/oder Regelungseinrichtung.

## Claims

1. A bearing arrangement, comprising
- at least two annular components (1, 3) which are rotatable relative to each other about an axis of rotation, wherein
- a plurality of rolling elements (2) is arranged between the annular components (1, 3) which supports them against each other during a rotation relative to each other, **characterised in that**
for heating and/or cooling of at least one of the annular components (1, 3) a plurality of material recesses (4) is provided in the axial direction at at least one of the annular components (1, 3), which at least forms one portion of a flow channel,
wherein
- at the least one of the annular components (1, 3)
(i) at least one jacket-shaped part (8) and
(ii) at least one upper end plate (10) and/or at least one lower end plate (11) are attached which form a fluidic boundary of the flow channel against the environment, and wherein
- between the annular components (1, 3) and the respective endplate (10, 11) each perforated disks (12, 13) are provided which form flow chambers (14, 15) which fluidically connect the material recesses (4) in the circumferential direction.

2. The bearing arrangement according to Claim 1, **characterised in that** the material recesses (4) in the axial direction are in fluidic connection with at least one material recess (5) in the circumferential direction.

3. The bearing arrangement according to any of Claims 1 or 2, **characterised in that** the flow chambers (14, 15) fluidically interconnect the material recesses (4) arranged in the axial direction in such a manner in the circumferential direction that a meander-shaped or serpentine-shaped flow channel is formed.

4. The bearing arrangement according to any of the previous claims, **characterised in that** the upper end plate (10) and/or the lower end plate (11) and/or the jacket-shaped part (8) comprises at least one filling device, preferably at least one filling hole, via which a heat exchange medium may be supplied into and discharged from the flow channel.

5. The bearing arrangement according to any of the previous claims, **characterised in that** for heating and/or cooling elements (18) for heating and/or cooling are provided, in particular heating wires, electro-thermal transducers and/or Peltier elements, wherein the mentioned elements (18) are arranged at walls of the material recesses (4, 5) and/or are arranged at or adjacent to the rolling element race (2).

6. The bearing arrangement according to any of the previous claims, **characterised in that** on the circumference at least one of the components (1, 3) which are rotatable relative to each other, or on material recesses (4, 5) provided on plane surfaces of the overall arrangement is formed annular, like an annular chamber, or an annular segment, or an annular groove or a cut-in, or meander-like or show a geometry combined therefrom, or is provided in several planes, in particular in concentric planes of different diameters.

7. The bearing arrangement according to any of the previous claims, **characterised by** a device for integrated heating or cooling of the bearing arrangement with a controlling and/or regulating device for controlling and/or regulating heating and/or cooling, which enables switching between heating and cooling.

8. A method for integrated heating or cooling of a bearing arrangement according to any of Claims 1 to 7, **characterised in that** heat input into at least one of the annular components (1, 3) or direct heat removal from at least one of the components (1, 3) is controlled or regulated in a defined manner.

9. The method according to Claim 8, **characterised in that** the temperature of at least one annular component (1, 3) is set to a desired operating temperature depending on the ambient temperature, preferably to an operating temperature which is adapted to a predetermined advantageous temperature of an employed lubricant.

10. The method according to any of Claims 8 or 9, **characterised in that** it is switched between heat input and heat removal.

11. The method according to Claim 10, **characterised in that** switching between heat input and heat removal is effected by electrical signals or by inverting electrical control signals of electrical assemblies, in particular exclusively by an electrical signal or by inverting the electrical control signal of an electrical assembly.

12. The method according to any of Claims 10 or 11, **characterised in that** switching between heat input and heat removal is effected by temperature variation of the heat exchange medium flowing or streaming through said arrangement, in particular by a continuous or a rapid temperature increase or temperature decrease of the heat exchange medium.

13. The method according to any of Claims 8 to 12, **characterised in that** heat input and/or heat removal is increased by additional indirectly heating or indirectly cooling elements (18) which are arranged on surfaces or in material recesses (4, 5) or in holes (6) of the components (1, 3) which are rotatable relative to each other or in the bearing gap.

14. The method according to any of Claims 8 to 13, **characterised in that** the heat exchange medium is guided through the flow channel in a preferred flow direction (16), wherein the preferred flow direction (16) may be changed, in particular by a controlling and/or regulating device.

## Revendications

1. Agencement de palier, comprenant
- au moins deux composants annulaires (1, 3) qui peuvent tourner l'un par rapport à l'autre autour d'un axe de rotation, dans lequel
- une pluralité de corps roulants (2) disposés entre les composants annulaires (1, 3), qui les soutiennent l'un contre l'autre lors d'une rotation relative, **caractérisé en ce que**
une pluralité d'évidements de matériau (4) sont prévus pour le chauffage et/ou le refroidissement d'au moins un des composants annulaires (1, 3) dans la direction axiale sur au moins un composant annulaire (1, 3), lesquels évidements formant au moins une section d'un canal d'écoulement,
dans lequel
- sur ledit au moins un composant annulaire (1, 3)
(i) au moins une partie en forme d'enveloppe (8) et
(ii) au moins une plaque de fermeture supérieure (10) et/ou au moins une plaque de fermeture inférieure (11) sont fixées, qui forment une délimitation fluidique du canal d'écoulement par rapport à l'environnement,
et dans lequel
- entre le composant annulaire (1, 3) et la plaque de fermeture correspondante (10, 11) sont prévus respectivement des disques perforés (12, 13) formant des chambres d'écoulement (14, 15) qui relient fluidiquement les évidements de matériau (4) les uns aux autres dans la direction circonférentielle.

2. Agencement de palier selon la revendication 1, **caractérisé en ce que** les évidements de matériau (4) dans la direction axiale sont en liaison fluidique avec au moins un évidement de matériau (5) dans la direction circonférentielle.

3. Agencement de palier selon l'une des revendications 1 ou 2, **caractérisé en ce que** les chambres d'écoulement (14, 15) relient fluidiquement les évidements de matériau (4) disposés dans la direction axiale les uns aux autres dans la direction circonférentielle de telle sorte qu'un canal d'écoulement en méandres ou en serpentin est formé.

4. Agencement de palier selon l'une des revendications précédentes, **caractérisé en ce que** la plaque de fermeture supérieure (10) et/ou la plaque de fermeture inférieure (11) et/ou la partie en forme d'enveloppe (8) comprennent au moins un dispositif de remplissage, de préférence au moins un alésage de remplissage, par lequel un milieu d'échange thermique peut être amené au canal d'écoulement et en être évacué.

5. Agencement de palier selon l'une des revendications précédentes, **caractérisé en ce que** des éléments (18) de chauffage et/ou de refroidissement sont prévus pour le chauffage et/ou le refroidissement, en particulier des fils chauffants, des convertisseurs électrothermiques et/ou des éléments Peltier, lesdits éléments (18) étant disposés sur des parois des évidements de matériau (4, 5) et/ou étant disposés sur ou au voisinage du chemin de roulement des corps roulants (2).

6. Agencement de palier selon l'une des revendications précédentes, **caractérisé en ce que** des évidements de matériau (4, 5) présents sur la circonférence d'au moins l'un des composants (1, 3) pouvant tourner l'un par rapport à l'autre ou sur des surfaces planes de l'agencement total sont réalisés en forme d'anneau ou de chambre annulaire ou de segment annulaire ou de rainure annulaire ou d'encoche ou de méandre, ou possèdent une géométrie combinée de ces formes ou sont présents dans plusieurs plans, en particulier des plans concentriques de diamètre différent.

7. Agencement de palier selon l'une des revendications précédentes, **caractérisé par** un dispositif de chauffage ou de refroidissement intégré de l'agencement de palier avec un moyen de commande et/ou de régulation pour la commande et/ou la régulation du chauffage et/ou du refroidissement, qui permet une commutation entre chauffage et refroidissement.

8. Procédé de chauffage ou de refroidissement intégré d'un agencement de palier selon l'une des revendications 1 à 7, **caractérisé en ce que** l'apport direct de chaleur dans au moins l'un des composants annulaires (1, 2) ou la dissipation directe de chaleur d'au moins l'un des composants (1, 3) est commandé(e) ou régulé(e) de manière définie.

9. Procédé selon la revendication 8, **caractérisé en ce que** la température d'au moins un composant annulaire (1, 3) est réglée à une température de fonctionnement souhaitée en fonction de la température ambiante, de préférence à une température de fonctionnement adaptée à une température favorable prédéterminée d'un lubrifiant utilisé.

10. Procédé selon la revendication 8 ou 9, **caractérisé en ce qu'**une commutation entre un apport de chaleur et une dissipation de chaleur est effectuée.

11. Procédé selon la revendication 10, **caractérisé en ce que** la commutation entre apport de chaleur et dissipation de chaleur est provoquée par des signaux électriques ou par inversion de commandes électriques d'ensembles électriques, en particulier exclusivement par un signal électrique ou par inversion de la commande électrique d'un ensemble électrique.

12. Procédé selon l'une des revendications 10 ou 11, **caractérisé en ce que** la commutation entre apport de chaleur et dissipation de chaleur est provoquée par un changement de température du milieu d'échange thermique circulant ou s'écoulant à travers ledit agencement, en particulier par une augmentation ou une diminution continue ou rapide de la température du milieu d'échange thermique.

13. Procédé selon l'une des revendications 8 à 12, **caractérisé en ce que** l'apport et/ou la dissipation de chaleur sont renforcés par des éléments supplémentaires (18) chauffant ou refroidissant indirectement, qui sont disposés sur des surfaces ou dans des évidements de matériau (4, 5) ou des alésages (6) des composants (1, 3) pouvant tourner l'un par rapport à l'autre ou dans l'interstice de palier.

14. Procédé selon l'une des revendications 8 à 13, **caractérisé en ce que** le milieu d'échange thermique est conduit à travers le canal d'écoulement dans un sens d'écoulement préférentiel (16), le sens d'écoulement préférentiel (16) pouvant être modifié, en particulier par un moyen de commande et/ou de régulation.
